Europäisches Patentamt

(19) European Patent Office

Office européen des brevets

(11) Publication number: **0 302 636 B1**

(12) # EUROPEAN PATENT SPECIFICATION

(45) Date of publication of patent specification :
**12.06.91 Bulletin 91/24**

(51) Int. Cl.[5] : **B01J 29/28, B01J 29/38, C10G 3/00**

(21) Application number : **88306762.1**

(22) Date of filing : **22.07.88**

(54) Ammonium activation of zeolites in the presence of gaseous ammonia.

(30) Priority : **05.08.87 US 81955**
**04.01.88 US 140359**

(43) Date of publication of application :
**08.02.89 Bulletin 89/06**

(45) Publication of the grant of the patent :
**12.06.91 Bulletin 91/24**

(84) Designated Contracting States :
**BE DE FR GB IT NL**

(56) References cited :
**EP-A- 0 035 830**
**EP-A- 0 142 313**
**EP-A- 0 148 626**
**EP-A- 0 169 027**
**US-A- 4 326 994**
**US-A- 4 477 582**

(73) Proprietor : **MOBIL OIL CORPORATION**
**150 East 42nd Street**
**New York New York 10017 (US)**

(72) Inventor : **Chang, Clarence Dayton**
**11 Murray Place**
**Princeton, NJ 08540 (US)**
Inventor : **Lee, Carol Sana**
**37 Hawthorne Avenue**
**Princeton, NJ 08540 (US)**
Inventor : **Chu, Cynthia Ting-Wah**
**18 Indian Run Road**
**Princeton Junction, NJ 08550 (US)**

(74) Representative : **Jones, Alan John et al**
**CARPMAELS & RANSFORD 43 Bloomsbury Square**
**London, WC1A 2RA (GB)**

EP 0 302 636 B1

## Description

This invention relätes to the activation of alumina-bound zeolite catalysts, particularly those deactivated by steam or use in organic conversion processes.

Methods for enhancing the catalytic activity of zeolitic materials are well known, including treatments involving ammonium ion or ammonia. US-A-4,326,994 relates to a process for enhancing acidic activity of a highly siliceous zeolite by contact with steam and ammonia. Ammoniacal aluminium fluoride is disclosed as a reagent for zeolite activation in US-A-4,427,788, whilst US-A-3,684,738 discloses the treatment of deactivated oxygen-regenerated zeolites with a source of hydrogen ions or hydrogen ion precursors such as an ammonium chloride solution. US-A-4,427,788 discloses the use of aluminium fluoride in solution with ammonium hydroxide and/or ammonia. US-A-4,500,419 discloses zeolite activation by treatment with hydrogen fluoride, followed by ammonolysis.

It has now been found that the catalytic activity of an alumina-bound zeolite having a determinable initial activity can be increased by contacting the zeolite with an aqueous ammonium solution under ammonia gas pressure such that a desired minimum pH is maintained in the solution. The resulting zeolite can be calcined thereafter in order to convert the zeolite to the hydrogen form without ammonium-exchange treatment.

According to the present invention a method of increasing the acid activity of a catalytic composition comprising a crystalline zeolite having a lattice silica/alumina mole ratio of at least 100 and a constraint index of 1 to 12 and an aluminum-containing inorganic oxide binder comprises contacting the composition with an aqueous ammonium solution at a pH of at least 8, under an ammonia atmosphere, at a temperature of 40 to 200°C for from 2 to 72 hours.

The present invention can also be described as a method for modifying a composition to increase its acid catalytic activity. The composition comprises a solid source of aluminium such as an aluminium oxide binder and a zeolite having a constraint index of about 1 to 12. The method of the invention comprises contacting said composition with an aqueous ammonium solution under ammonia gas pressure such that a pH of at least about 8, preferably at least about 10, is maintained in the solution. A combination of conditions is maintained during this treatment so as to effect an increase in catalytic activity. Such conditions can include a temperature of about 40 to 200°C, preferably about 90 to 150°C for about 2 to 72 hours, preferably about 24 to 48 hours. The resulting composition may then be calcined in an inert or oxygen-containing atmosphere in order to place it in a catalytically active form without the need for exposing the resulting composition to ammonium exchange conditions. Calcination can take place at about 200 to 600°C, preferably about 500 to 550°C, for about 1 minute to 48 hours, preferably about 0.5 to 6 hours. The aqueous ammonium solution is in preferred embodiments a solution of $(NH_4)_2CO_3$, $NH_4OH$ and/or $(NH_4)_2HPO_4$.

The catalyst which is activated by the method of the present invention may be used in the conversion of C1 to C4 alcohols and/or ethers to hydrocarbons including aromatics, and it may be reactivated by that method after such use. It may also be used in cracking, particularly for the lowering of feedstock pour point, as in dewaxing of stocks such as gasoils.

The aqueous ammonium solution employed for activating catalysts in accordance with the method of the present invention may have an ammonium concentration of from about 0.001 to 20 N. The preferred concentration in the case when the ammonia atmosphere is autogenously generated is 5 to 15, more preferably 10 to 12 N. When the atmosphere comprises added ammonia the preferred concentration is 0.01 to 10, more preferably 0.1 to 5 N (equivalents of ammonium ion/litre). The ammonia gas pressure employed may range from 20 to 1000 psig (2.4 to 70 bar), preferably from about 80 to 500 psig (6.53 to 35.5 bar), preferably 80 to 100 psig (6.53 to 7.9 bar). Contacting occurs at a temperature of 40 to 200°C, preferably about 100 to 150°C, for 2 to 72 hours, preferably about 24 to 48 hours.

The contacting may also occur in the presence of a weak acid having a pKa of at least about 2 at 25°C. Examples of such weak acids include $H_2CO_3$, $H_3BO_3$, $H_3PO_4$, acetic and citric acid. Alternatively, said contacting can occur in the presence of an alkylammonium hydroxide, such as tetrapropylammonium hydroxide.

Following activation the composite may be treated with steam, suitably at a temperature of 400 to 600°C, a steam pressure of 0.5 to 10 atm (0.5 to 10.2 bar) for from 1 hour to 7 days, under an overall pressure of 1 to 100 atm (1 to 101.4 bar).

The catalyst composition treated by the method of the present invention may be one which has been previously utilized in an organic feedstock conversion under conditions sufficient to deactivate it by removal of aluminium from the zeolite lattice. Indeed the catalyst composition treated according to the present invention may be any which has been previously contacted with steam under conditions sufficient to deactivate the composition by loss of aluminium from the zeolite lattice. Such deactivation can occur under conditions of about 500 to 1700°F (260 to 927°C), for less than 1 hour to 1 week, at 50 ppm $H_2O$ to 1 atm $H_2O$, and an overall pressure of less than 1 atm (bar) pressure to 3000 atm (3041 bar). Thus, as the Examples hereinbelow presented demonstrate the zeolite contained in a deactivated catalyst subjected to reactivation in accordance with the invention may well have a lattice silica/alumina molar ratio far in excess of 100 even though before deactivation it had a lattice silica/alumina ratio below 100. The aluminium removed from the framework in the process of deactivation, being no longer in tetrahedral coordination in the framework, no longer contributes to the silica/alumina ratio of the lattice. Lattice silica/alumina ratio can be determined in known manner by temperature programmed ammonia desorption (TPAD).

Constraint Index (CI) values for some typical materials are :

|  | CI (at test temperature) | |
| --- | --- | --- |
| ZSM-4 | 0.5 | (316°C) |
| ZSM-5 | 6-8.3 | (371°C - 316°C) |
| ZSM-11 | 5-8.7 | (371°C - 316°C) |
| ZSM-12 | 2.3 | (316°C) |
| ZSM-20 | 0.5 | (371°C) |
| ZSM-22 | 7.3 | (427°C) |
| ZSM-23 | 9.1 | (427°C) |
| ZSM-34 | 50 | (371°C) |
| ZSM-35 | 4.5 | (454°C) |
| ZSM-38 | 2 | (510°C) |
| ZSM-48 | 3.5 | (538°C) |
| ZSM-50 | 2.1 | (427°C) |
| TMA Offretite | 3.7 | (316°C) |
| TEA Mordenite | 0.4 | (316°C) |
| Clinoptilolite | 3.4 | (510°C) |
| Mordenite | 0.5 | (316°C) |
| REY | 0.4 | (316°C) |
| Amorphous Silica-alumina | 0.6 | (538°C) |
| Dealuminised Y | 0.5 | (510°C) |
| Erionite | 38 | (316°C) |
| Zeolite Beta | 0.6-2.0 | (316°C-399°C) |

It should be noted that Constraint Index seems to vary somewhat with severity of operations (conversion) and the presence or absence of binders. Likewise, other variables, such as crystal size of the zeolite, the presence of occluded contaminants, etc., may affect the Constraint Index. Therefore, it will be appreciated that it may be possible to so select test conditions, e.g., temperature, as to establish more than one value for the Constraint Index of a particular porous crystalline aluminosilicate. This explains the range of Constraint Indices for some zeolites, such as ZSM-5, ZSM-11 and Beta. The test by which Constraint Index is determined is described in US-A-4,016,218. For the purposes of the present specification a zeolite is considered to possess a Constraint Index of 1 to 12 if under any set of conditions permitted by that test it manifests a Constraint Index within that range, even though under different permitted conditions it may manifest a Constraint Index outside that range.

It is also to be noted that many of the zeolites set forth in the Table hereinabove, and which are preferred components of compositions to be treated according to the invention, are capable of existence in forms containing vanishingly small quantities of aluminium. US-A-3,941,871 and -4,061,724, for example, describe ZSM-5 structures synthesised from reaction mixtures which contain no deliberately added source of alumina.

The zeolitic catalyst composition of the invention comprises an aluminium-containing matrix or binder material normally resistant to the temperature and other conditions employed in a chemical conversion process. Such material imparts greater resistance to the severe temperature, pressure and reactant feed stream velocity conditions encountered in many processes, such as, for example, cracking. The zeolite content of the zeolite/binder composite suitably ranges from 1 to 99, preferably 5 to 80, still more preferably 60 to 70 weight percent. Useful binder materials include both synthetic and naturally occurring substances, as well as aluminium-containing inorganic materials such as clay and/or metal oxides, e.g., alumina. They may be either naturally occurring or in the form of gelatinous precipitates or gels including mixtures of silica and metal oxides, such as silica-alumina, or ternary compositions, such as silica-alumina-thoria, silica-alumina-zirconia, and silica-alumina-magnesia. Naturally occurring clays which can be composited with the zeolite include those of the montmorillonite and kaolin families, which families include the sub-bentonites and the kaolins commonly known as Dixie, McNamee, Georgia and Florida clays or others in which the main mineral constituent is halloysite, kaolinite, dickite, nacrite or anauxite. Such clays can be used in the raw state as originally mined or initially subjected to calcination, acid treatment or chemical modification.

The conversion of alcohols and/or ethers to aromatics and lower molecular weight hydrocarbons over the catalyst composition activated as described above may be carried out at a temperature of 100°C to 800°C, a pressure of 0.1 atmosphere (bar) to 200 atmospheres (202.8 bar), a weight hourly space velocity of 0.08 $hr^{-1}$ to 2000 $hr^{-1}$ and a hydrogen/feedstock organic compound mole ratio of from 0 (no added hydrogen) to about 100. Preferred conditions include a temperature of 275°C to 600°C, a pressure of 0.5 atmosphere (bar) to 50 atmospheres (50.7 bar) and a liquid hourly space velocity of 0.5 to 100.

The cracking of hydrocarbons may be carried out at a temperature of 250°C to 700°C, a pressure of greater than 0.1 atmosphere (bar) and a weight hourly space velocity of from about 0.1 to about 20. In the special case of cracking where the objective is dewaxing, suitable conditions comprise a temperature of 250 to 500°C, pressure of 300 to 600 psig (21.7 to 42.4 bar) and 0.1 to 5 liquid hourly space velocity.

The following Examples illustrate the invention. The alpha values reported in them were determined by the test set forth in J. Cat., Vol IV, pp. 527-529 (August, 1965).

Example 1 – An extrudate consisting of 65 weight percent H-ZSM-5 having a bulk $SiO_2/Al_2O_3$ ratio of about 880 (lattice $SiO_2/Al_2O_3$ of 1383) and 35 weight percent $Al_2O_3$, and having an alpha value of 4, was treated with various $NH_4^+$ solutions in an autoclave pressurised to 80 psig (6.53 bar) by ammonia addition. The results arc summarized in Table 1. With a 0.5 N $(NH_4)_2CO_3$ solution at 50°C for 3 days, at pH 7.8, no significant change in cracking activity was observed. When the temperature was increased to 100°C, the alpha value inreased to 15. With a higher concentration solution of 1 N, at pH 10.0, 20 hours treatment increased the alpha to 84. With 1 N $NH_4OH$ solution, at pH 11.3, at 100°C for 20 hours, the alpha increased to 95. With 1 N$(NH_4)_2HPO_4$ solution at 100°C for 20 hours, at pH 8.5, alpha increased to 39.

Example 2 – In order to study the effects of increasing the concentration of $NH_3$ in solution, again employing 1N $NH_4OH$, at pH 11.3, higher ammonia pressure was applied. Table 2 sets out the results of $NH_3$ treatment at 80 and 1000 psig (6.53 and 70 bar) of the extrudate of Example 1 as well as a similarly proportioned extrudate containing ZSM-5 having a bulk $SiO_2/Al_2O_3$ ratio of 520 (lattice $SiO_2/Al_2O_3$ of 663). The results show the high pressure process gives lower activation as measured by the alpha test. The crystallinity calculated by n-$C_6$ sorption agrees with the crystallinity obtained by x-ray diffraction (XRD). This may be an indication that very little dissolution of the crystals occurs when treated by the present process.

Example 3 – Table 3 sets out the results of treating the unbound form of the zeolite used in Example 2 with $NH_3$ for 20 and 72 hours employing 1N $NH_4OH$ as the aqueous ammonium solution (pH 11.3). The alpha of the zeolite remained unchanged indicating that no activation occurred in the absence of alumina binder. Accordingly, it is believed that the $NH_3$ treatment causes little structural damage to zeolites. The extrudate tested in each case for comparison consisted of 65% wt. zeolite and 35% wt. alumina binder.

## TABLE 1

### Treatment of ZSM-5 Extrudate ($SiO_2/Al_2O_3$ = 880)

### 100°C for 20 hours

### $NH_3$ Pressure = 80 psig (6.53 bar)

| Treatment | Conc. | Time (hr) | Alpha |
|---|---|---|---|
| --- | --- | --- | 4 |
| $(NH_4)_2CO_3$ | 0.5N | 3 days* | 6 |
| $(NH_4)_2CO_3$ | 0.5N | 20 | 15 |
| $(NH_4)_2CO_3$ | 1N | 20 | 84 |
| $(NH_4)_2HPO_4$ | 1N | 20 | 39 |
| $NH_4OH$ | 1N | 20 | 95 |

* at 50°C

## TABLE_2

### Activation of High $SiO_2/Al_2O_3$ ZSM-5 Extrudate

### 100°C

### $NH_3$ Pressure = 80 and 1000 psig (6.53 and 70 bar)

#### $SiO_2/Al_2O_3 = 880$

| | | | |
|---|---|---|---|
| Time (hr) | --- | 20 | 20 |
| $NH_3$ P (psig)(bar) | --- | 80 (6.53) | 1000 (70) |
| Alpha | 4 | 95 | 44 |
| n-$C_6$ sorp (%) | 7.90 | 5.43 | 5.26 |
| △ n-$C_6$ sorp (%) | 100 | 69 | 67 |
| XRD (%) | 100 | 69 | 69 |

#### $SiO_2/Al_2O_3 = 520$

| | | | |
|---|---|---|---|
| Time (hr) | --- | 20 | 20 |
| $NH_3$ P (psig)(bar) | --- | 80 (6.53) | 1000 (70) |
| Alpha | 16 | 193 | 109 |
| n-$C_6$ sorp (%) | 7.24 | 5.23 | 4.49 |
| △ n-$C_6$ sorp (%) | 100 | 72 | 62 |
| XRD (%) | 100 | 71 | 61 |

## TABLE 3

## Activation of high $SiO_2/Al_2O_3$ ZSM-5

## 100°C

### $NH_3$ Pressure = 80 psig (6.53 bar)

#### $SiO_2/Al_2O_3$ = 520

| Form | extrudate | zeolite | zeolite |
|---|---|---|---|
| Time (hr) | 20 | 20 | 72 |
| Alpha (initial) | 16 | 16 | 16 |
| Alpha (final) | 193 | 15 | 16 |

### $NH_3$ Pressure = 1000 psig (70 bar)

#### $SiO_2/Al_2O_3$ = 520

| Form | extrudate | zeolite | zeolite |
|---|---|---|---|
| Time (hr) | 20 | 20 | 72 |
| Alpha (initial) | 16 | 16 | 16 |
| Alpha (final) | 109 | 18 | 14 |

Examples 4 – A fresh catalyst containing 65 wt.% ZSM-5 and 35 wt.% alumina binder was deactivated while using the catalyst in a process for converting methanol to hydrocarbons, particularly gasoline boiling range hydrocarbons including aromatics. The lattice silica to alumina molar ratio of the ZSM-5 in the fresh catalyst was 70 :1. Coke was removed from the deactivated catalyst in which the lattice silica/alumina molar ratio of the ZSM-5 was approximately 400, by calcining the catalyst in air for 12 hours at 538°C. This calcination removed 6 wt.% coke and gave a spent catalyst with an alpha value of 8. This spent catalyst was reactivated by treatment in a sealed vessel, at an initial pressure of 60 psig (5.15 bar), for 20 hr. at 100°C with 10 mole% aqueous ammonium hydroxide at pH 12, washed with deionized water, dried at 110°C and calcined at 538°C. The alpha value of the reactivated sample was 70.

Example 5 – The reactivated catalyst of Example 4 was used for methanol to gasoline conversion at 4 WHSV 83% methanol, 440°C hot spot temperature, 300 psig (21.7 bar), 9 : 1 molar He : methanol feed. Table 4 shows product distributions from methanol conversion over the first cycle, which lasted 4.5 days to methanol breakthrough. By way of comparison, the first cycle over the fresh catalyst lasted for 5.4 days to methanol breakthrough. The total first cycle C5+hydrocarbon yield for the reactivated catalyst was 75% of that for fresh catalyst. The calcined spent catalyst mentioned in Example 4, prior to reactivation lasted less than one hour until methanol breakthrough.

EP 0 302 636 B1

## TABLE 4

### Aging Test

| Time on Stream, hrs. | 5 | 52 | 76 | 108 |
|---|---|---|---|---|
| Selectivity to Hydrocarbons, wt.% | 32.9 | 34.9 | 33.6 | 34.2 |
| Aromatics, wt.% | 13.0 | 10.1 | 10.7 | 10.2 |
| $C_5$+ hydrocarbons/ total hydrocarbons, wt.% | 71.6 | 67.0 | 73.0 | 71.7 |
| Methanol, wt.% | 0.0 | 0.0 | 0.0 | 0.1 |
| Water, wt% | 67.1 | 65.1 | 66.4 | 65.7 |
| Dimethylether, wt.% | 0.0 | 0.0 | 0.0 | 0.0 |

Example 6 – A fresh catalyst containing 65 wt.% ZSM-5 of lattice silica to alumina molar ratio 70 : 1, and 35 wt.% alumina binder, was deactivated while using the catalyst in a process for converting methanol to hydrocarbons, particularly gasoline boiling range hydrocarbons including aromatics. Coke was removed from the deactivated catalyst, in which the lattice silica/alumina molar ratio of the ZSM-5 was 460, by calcining the catalyst in air at about 538°C ; the alpha value after calcination was 3. This spent catalyst was reactivated by treatment in a sealed vessel under autogenous pressure for 48 hours at 90°C with 20 mole% (10.5M) aqueous ammonium hydroxide, washed with deionized water, dried at 110°C, and calcined at 538°C. The alpha value of the reactivated sample was 225. The reactivated catalyst was then treated for 4 hrs. at 500°C with 0.6 atm water at 1.0 atmosphere overall pressure.

Example 7 – The catalyst of Example 6 was used for catalytic dewaxing of Nigerian Light Vacuum Gas Oil (pour point –70°F) (–57°C) at 1.0 LHSV, 300 psig (21.7 bar), 2000 SCF/B (356 m³/m³) hydrogen. Table 5 compares the performance of catalyst from Example 6 with a fresh catalyst containing 65 wt.% ZSM-5, of 70 : 1 lattice silica to alumina molar ratio, and 35% alumina binder. In comparison, under the same process conditions, the spent catalyst of Example 6, before reactivation, was unable to convert the distillate fraction (330°F+) (166°C+) of Nigerian Light Vacuum Gas Oil to a target pour point of 0°F.

8

## TABLE 5

## Catalytic Dewaxing of Nigerian LVGO

| Catalyst: | Fresh ZSM-5, 70:1 SiO₂/Al₂O₃ | Reactivated ZSM-5 (Example 6) |
|---|---|---|
| Days on stream | 16 | 29 |
| Temperature, °F (°C) | 776 (413) | 795 (424) |
| Pressure, psig | 300 | 300 |
| LHSV | 1.0 | 1.0 |
| H₂ circulation, SCF/B | 2000 | 2000 |

### Product Distribution, wt.%

| | | |
|---|---|---|
| C₁-C₅ gas | 15 | 16 |
| C₆-330°F naphtha | 6 | 6 |
| 330°F+ gas oil | 79 | 78 |
| Pour point, 330°F+ fraction | -20F (-29C) | -27F (-33C) |

**Claims**

1. A method of increasing the acid activity of a catalytic composition comprising a crystalline zeolite having a lattice silica/alumina mole ratio of at least 100 and a constraint index of 1 to 12 and an aluminum-containing inorganic oxide binder, said method comprising contacting the composition with an aqueous ammonium solution at a pH of at least 8, under an ammonia atmosphere, at a temperature of 40 to 200°C for from 2 to 72 hours.

2. A method according to claim 1 wherein the resulting composition is calcined at 200 to 600°C for from 1 minute to 48 hours.

3. A method according to claim 1 or claim 2 wherein the ammonium solution comprises $(NH_4)_2CO_3$, $NH_4OH$ and/or $(NH_4)_2HPO_4$.

4. A method according to any preceding claim wherein said silica to alumina mole ratio is at least 500.

5. A method according to any preceding claim wherein said zeolite has the structure of zeolite ZSM-5, ZSM-11, ZSM-12, ZSM-23, ZSM-35, ZSM-38, ZSM-48 or zeolite beta.

6. A method according to any preceding claim wherein said solution has an ammonium concentration of 0.001 to 20 N.

7. A method according to any preceding claim wherein the pressure of said atmosphere is from 40 to 1000 psig (3.77 to 70 bar).

8. A method according to any preceding claim wherein said contacting occurs at a temperature of 90 to 150°C.

9. A method according to any preceding claim wherein said contacting occurs in the presence of a weak acid having a pKa of at least 2 at 25°C.

10. The method of claim 9 wherein said acid is $H_2CO_3$, $H_3BO_3$ or citric acid.

11. A method according to any preceding claim wherein said contacting occurs in the presence of an alkylammonium hydroxide.

12. A method according to claim 11 wherein said hydroxide is tetrapropylammonium hydroxide.

13. A method according to any preceding claim wherein the pressure of said atmosphere is from 80 to 500 psig (6.53 to 35.5 bar).

14. A method according to any preceding claim wherein said contacting occurs at a temperature of 100 to 150°C.

15. A method according to any preceding claim wherein said aqueous ammonium solution is 10 mole percent ammonium hydroxide.

16. A method according to any preceding claim wherein the binder comprises more than one inorganic oxide.

17. A method according to any of claims 1 to 15 wherein the binder is alumina.

18. A method according to any preceding claim wherein the composition subjected to the contacting has an alpha value less than 10.

19. A method according to any preceding claim wherein the resulting composition is treated with steam at 400 to 600°C at 0.5 to 10 atm (0.5 to 10.2 bar) steam pressure from from 1 hour to 7 days under an overall pressure of 1 to 100 atm (1 to 101.4 bar).

20. A method according to any preceding claim wherein said solution has an ammonium concentration of 0.01 to 10 N.

21. A method according to claim 20 wherein said concentration is 0.1 to 5 N.

22. A method according to any preceding claim wherein said ammonia atmosphere is autogenously generated.

23. A method according to any of claims 1 to 19 wherein said solution has an ammonium concentration of 5 to 15 N.

24. A method according to claim 23 wherein said concentration is 10 to 12 N.

25. A method according to any preceding claim wherein the starting composition is one deactivated by use as catalyst for the conversion of alcohols and/or ethers to hydrocarbons.

26. A process for converting a feed comprising C1 to C4 alcohols and/or ethers to hydrocarbons including aromatics, said process comprising contacting said alcohols and/or ethers under conversion conditions with a catalyst composition activated by the method claimed in any of claims 1 to 25.

27. A process according to claim 26 wherein said feed is methanol.

28. A process for cracking a hydrocarbon feed which comprises contacting the same, under cracking conditions, with a catalyst composition activated by the method claimed in any of claims 1 to 25.

29. A process according to claim 28 wherein the cracking is dewaxing and the conditions include a temperature of 250 to 500°C, a pressure of 21.7 to 42.4 bar and a liquid hourly space velocity of 0.1 to 5 hr$^{-1}$.

## Ansprüche

1. Verfahren zur Verbesserung der Säureaktivität einer katalytischen Zusammensetzung, die einen kristallinen Zeolith mit einem Siliciumdioxid/Aluminiumoxid-Molverhältnis des Gitters von mindestens 100 und einem Zwangsindex von 1 bis 12 und ein Aluminium enthaltendes anorganisches Oxidbindemittel umfaßt, wobei dieses Verfahren den Kontakt über 2 bis 72 Stunden mit einer wässrigen Ammoniumlösung bei einem pH-Wert von mindestens 8 unter einer Ammoniakatmosphäre bei einer Temperatur von 40 bis 200°C umfaßt.

2. Verfahren nach Anspruch 1, worin die resultierende Zusammensetzung eine Minute bis 48 Stunden lang bei 200 bis 600°C kalziniert wird.

3. Verfahren nach Anspruch 1 oder 2, worin die Ammoniumlösung $(NH_4)_2CO_3$, $NH_4OH$ und/oder $(NH_4)_2HPO_4$ umfaßt.

4. Verfahren nach einem der vorstehenden Ansprüche, worin das Siliciumdioxid/Aluminiumoxid-Molverhältnis mindestens 500 beträgt.

5. Verfahren nach einem der vorstehenden Ansprüche, worin der Zeolith die Struktur von Zeolith ZSM-5, ZSM-11, ZSM-12, ZSM-23, ZSM-35, ZSM-38, ZSM-48 oder Zeolith Beta aufweist.

6. Verfahren nach einem der vorstehenden Ansprüche, worin die Lösung eine Ammoniumkonzentration von 0,001 bis 20 n aufweist.

7. Verfahren nach einem der vorstehenden Ansprüche, worin der Druck der Atmosphäre von 40 bis 1000 psig (3,77 bis 70 bar) beträgt.

8. Verfahren nach einem der vorstehenden Ansprüche, worin der Kontakt bei einer Temperatur von 90 bis 150°C erfolgt.

9. Verfahren nach einem der vorstehenden Ansprüche, worin der Kontakt in Gegenwart einer schwachen Säure mit einem $pK_S$-Wert bei 25°C von mindestens 2 erfolgt.

10. Verfahren nach Anspruch 9, worin die Säure $H_2CO_3$, $H_3BO_3$ oder Zitronensäure ist.

11. Verfahren nach einem der vorstehenden Ansprüche, worin der Kontakt in Gegenwart von Alkylammoniumhydroxid erfolgt.

12. Verfahren nach Anspruch 11, worin das Hydroxid Tetrapropylammoniumhydroxid ist.

13. Verfahren nach einem der vorstehenden Ansprüche, worin der Druck der Atmosphäre von 80 bis 500 psig (6, 53 bis 35, 5 bar) beträgt.

14. Verfahren nach einem der vorstehenden Ansprüche, worin der Kontakt bei einer Temperatur von 100 bis 150°C erfolgt.

15. Verfahren nach einem der vorstehenden Ansprüche, worin die wässrige Ammoniumlösung Ammoniumhydroxid mit 10 Mol-% ist.

16. Verfahren nach einem der vorstehenden Ansprüche, worin das Bindemittel mehr als ein anorganisches Oxid umfaßt.

17. Verfahren nach einem der Ansprüche 1 bis 15, worin das Bindemittel Aluminiumoxid ist.

18. Verfahren nach einem der vorstehenden Ansprüche, worin die Zusammensetzung, die dem Kontakt unterzogen wird, einen Alpha-Wert von kleiner als 10 aufweist.

19. Verfahren nach einem der vorstehenden Ansprüche, worin die resultierende Zusammensetzung eine Stunde bis 7 Tage lang bei 400 bis 600°C bei einem Dampfdruck von 0,5 bis 10 atm (0,5 bis 10,2 bar) bei einem Gesamtdruck von 1 bis 100 atm (1 bis 101,4 bar) mit Dampf behandelt wird.

20. Verfahren nach einem der vorstehenden Ansprüche, worin die Lösung eine Ammoniumkonzentration von 0,01 bis 10 n aufweist.

21. Verfahren nach Anspruch 20, worin die Konzentration 0,1 bis 5 n beträgt.

22. Verfahren nach einem der vorstehenden Ansprüche, worin die Ammoniakatmosphäre autogen erzeugt wird.

23. Verfahren nach einem der Ansprüche 1 bis 19, worin die Lösung eine Ammoniumkonzentration von 5 bis 15 n aufweist.

24. Verfahren nach Anspruch 23, worin die Konzentration 10 bis 12 n beträgt.

25. Verfahren nach einem der vorstehenden Ansprüche, worin die Ausgangszusammensetzung eine solche ist, die durch Verwendung als Katalysator für die Umwandlung von Alkoholen und/oder Ethern in Kohlenwasserstoffe deaktiviert wurde.

26. Verfahren zur Umwandlung einer Zufuhr, die $C_1$-$C_4$-Alkohole und/oder Ether umfaßt, in Aromaten enthaltende Kohlenwasserstoffe, wobei dieses Verfahren den Kontakt der Alkohole und/oder Ether bei Umwandlungsbedingungen mit einer Katalysatorzusammensetzung umfaßt, die nach einem Verfahren nach einem der Ansprüche 1 bis 12 aktiviert wurde.

27. Verfahren nach Anspruch 26, worin die Zufuhr Methanol ist.

28. Verfahren zum Cracken einer Kohlenwasserstoffzufuhr, das den Kontakt dieser bei Crackbedingungen mit einer Katalysatorzusammensetzung umfaßt, die nach dem Verfahren nach einem der Ansprüche 1 bis 25 aktiviert wurde.

29. Verfahren nach Anspruch 8, worin das Cracken, das Entparaffinieren ist, und die Bedingungen eine Temperatur von 250 bis 500°C, einen Druck von 21,7 bis 42,4 bar und eine stündliche Flüssigkeit-Raum-Geschwindigkeit von 0,1 bis 5 $h^{-1}$ umfassen.

## Revendications

1. Un procédé pour augmenter l'activité acide d'une composition catalytique comprenant une zéolite cristalline présentant une proportion molaire silice/alumine dans le réseau d'au moins 100, et un indice de contrainte de 1 à 12, et un liant du type oxyde minéral contenant de l'aluminium, ce procédé consistant à mettre en contact la composition avec une solution aqueuse d'ammonium à un pH d'au moins 8, sous atmosphère d'ammoniac, à une température de 40 à 200°C pendant 2 à 72 heures.

2. Un procédé selon la revendication 1, dans lequel la composition obtenue est calcinée à une température de 200 à 600°C pendant 1 minute à 48 heures.

3. Un procédé selon la revendication 1 ou la revendication 2, dans lequel la solution d'ammonium comprend du $(NH_4)_2 CO_3$, du $NH_4 OH$ et/ou du $(NH_4)2HPO4$.

4. Un procédé selon l'une quelconque des revendications précédentes, dans lequel la proportion molaire silice/alumine est d'au moins 500.

5. Un procédé selon l'une quelconque des revendications précédentes, dans lequel ladite zéolite présente la structure de la zéolite ZSM-5, ZSM-11, SZM-12, ZSM-23, ZSM-35, ZSM-38, ZSM-48 ou de la zéolite bêta.

6. Un procédé selon l'une quelconque des revendications précédentes, dans lequel ladite solution a une concentration d'ammonium de 0,001 à 20 N.

7. Un procédé selon l'une quelconque des revendications précédentes, dans lequel la pression de ladite atmosphère est de 3,77 à 70 bars (40 à 1000 psig).

8. Un procédé selon l'une quelconque des revendications précédentes, dans lequel ladite mise en contact a lieu à une température de 90 à 150°C.

9. Un procédé selon l'une quelconque des revendications précédentes, dans lequel ladite mise en contact a lieu en présence d'un acide faible ayant un pKa d'au moins 2 à 25°C.

10. Le procédé selon la revendication 9, dans lequel ledit acide est $H_2CO_3$, $H_3BO_3$ ou l'acide citrique.

11. Un procédé selon l'une quelconque des revendications précédentes, dans lequel ladite mise en contact a lieu en présence d'un hydroxyde d'alkylammonium.

12. Un procédé selon la revendication 11, dans lequel ledit hydroxyde est l'hydroxyde de tétrapropylammonium.

13. Un procédé selon l'une quelconque des revendications précédentes, dans lequel la pression de ladite atmosphère est de 6,53 à 35,5 bars (80 à 500 psig).

14. Un procédé selon l'une quelconque des revendications précédentes, dans lequel ladite mise en contact a lieu à une température comprise entre 100 et 150°C.

15. Un procédé selon l'une quelconque des revendications précédentes, dans lequel ladite solution aqueuse d'ammonium est une solution contenant 10% moles d'hydroxyde d'ammonium.

16. Un procédé selon l'une quelconque des revendications précédentes, dans lequel le liant comprend plus d'un oxyde minéral.

17. Un procédé selon l'une quelconque des revendications 1 à 15, dans lequel le liant est l'alumine.

18. Un procédé selon l'une quelconque des revendications précédentes, dans lequel la composition soumise à la mise en contact a un indice alpha inférieur à 10.

19. Un procédé selon l'une quelconque des revendications précédentes, dans lequel la composition obtenue est traitée à la vapeur à une température de 400 à 600°C, sous une pression de vapeur de 0,5 à 10,2 bars (0,5 à 10 atmosphères), pendant 1 heure à 7 jours sous une pression totale de 1 à 101,4 bars (1 à 100 atmosphères).

20. Un procédé selon l'une quelconque des revendications précédentes, dans lequel ladite solution a une concentration d'ammonium de 0,01 à 10 N.

21. Un procédé selon la revendication 20, dans lequel ladite concentration est de 0,1 à 5 N.

22. Un procédé selon l'une quelconque des revendications précédentes, dans lequel ladite atmosphère d'ammoniac est produite spontanément.

23. Un procédé selon l'une quelconque des revendications 1 à 19, dans lequel la solution a une concentration d'ammonium de 5 à 15 N.

24. Un procédé selon la revendication 23, dans lequel ladite concentration est de 10 à 12 N.

25. Un procédé selon l'une quelconque des revendications précédentes, dans lequel la composition de départ est une composition désactivée du fait de son utilisation comme catalyseur pour la conversion d'alcools et/ou d'éthers en hydrocarbures.

26. Un procédé de conversion d'une charge comprenant des alcools et/ou des éthers en C1 à C4 en des hydrocarbures, y compris des aromatiques, ce procédé consistant à mettre en contact lesdits alcools et/ou éthers, dans les conditions de conversion, avec une composition de catalyseur activée par le procédé selon l'une quelconque des revendications 1 à 25.

27. Un procédé selon la revendication 26, dans lequel ladite charge est constituée de méthanol.

28. Un procédé de craquage d'une charge hydrocarbonée, qui consiste à la mettre en contact, dans les conditions d'un craquage, avec une composition de catalyseur activée par le procédé selon l'une quelconque des revendications 1 à 25.

29. Un procédé selon la revendication 28, dans lequel le craquage est un déparaffinage et les conditions comprennent une température de 250 à 500°C, une pression de 21,7 à 42,4 bars et une vitesse spatiale horaire liquide de 0,1 à 5 h$^{-1}$.